# EUROPÄISCHE PATENTSCHRIFT

(11) **EP 0 607 602 B1**
(45) Veröffentlichungstag und Bekanntmachung des Hinweises auf die Patenterteilung: **18.09.1996**
(21) Anmeldenummer: 93120772.4
(22) Anmeldetag: 23.12.1993
(51) Int. Cl.: B64D 11/00, B64D 13/00, F24F 13/20, F16L 41/00, F16L 3/22, F16L 9/12

(54) **Anordnung, bestehend aus einer Luftleitung und einer Versorgungseinheit**
Device, comprising an air duct and a supply unit
Dispositif comprenant une conduite d'air et une unité de distribution

(30) Priorität: 22.01.1993 DE 4301681
(43) Veröffentlichungstag der Anmeldung: 27.07.1994
(73) Patentinhaber: Daimler-Benz Aerospace Airbus Gesellschaft mit beschränkter Haftung, D-21129 Hamburg (DE)
(72) Erfinder: Schumacher, Markus, D-21614 Buxtehude (DE)
(74) Vertreter: Hansmann, Dierk, Dipl.-Ing.

(56) Entgegenhaltungen:
- FR-A- 1 387 730
- GB-A- 1 412 470
- US-A- 3 011 502
- US-A- 3 330 506

## Beschreibung

Die Erfindung bezieht sich auf eine justierbare Anordnung, bestehend aus einer Luftleitung und einer Passagierversorgungseinheit, im folgenden kurz Versorgungseinheit, im oberen Bereich einer Passagierkabine in einem Flugzeug, wobei die Versorgungseinheit Komfort- und Bedienelemente wie eine Frischluftdusche, eine schaltbare Leseleuchte, eine Stewardruftaste, einen Lautsprecher, Sauerstoffmasken, und eine optische Anzeigeeinheit und dergleichen aufweist.

In der Kabine eines Passagierflugzeuges ist jeweils einem oder mehreren Passagiersitzen eine derartige Versorgungseinheit zugeordnet. Bei Umrüstungen einer Passagierkabine, wobei die Sitzabstände geändert werden, sind Folgearbeiten durchzuführen, um die gegenseitigen Abstände der Versorgungseinheiten an die neuen Sitzabstände anzupassen. Ein Vorschlag zur Reduzierung der genannten Anpassungsarbeiten ist der gattungsbildenden US-PS 3,330,506 zu entnehmen. Dieses Dokument zeigt eine justierbare Passagierversorgungseinheit, die sich an unterschiedliche Sitzabstände dadurch anpassen läßt, daß die in Längsrichtung der Kabine verschiebbar ausgebildete Einheit in eine vorbestimmte neue Position gebracht und darin fixiert wird. Die Verschiebbarkeit wird dabei durch entsprechend verlegte Führungsschienen erreicht. Zur Sicherstellung der genannten Komfortfunktionen ist die Versorgungseinheit über Zuleitungen mit flugzeugseitigen Versorgungsleitungen wie einer Frischluftleitung, einer Sauerstoffleitung und elektrischen Leitungen verbunden. Dabei sind die Zuleitungen als flexible Schläuche oder Kabel von ausreichender Länge ausgebildet, wodurch sich eine Verschiebbarkeit der Versorgungseinheit in bestimmten Grenzen ergibt. Der Anschluß der Zuleitungen an die Versorgungsleitungen erfolgt über sogenannte Schnellverbinder. Bei dieser Lösung ist die überwiegende Anzahl der Zuleitungen vom Prinzip her länger als benötigt, was ein gewisses Zusatzgewicht zur Folge hat. Außerdem weisen die flugzeugseitigen Versorgungsleitungen die maximal vorkommende Anzahl von Anschlüssen auf, selbst wenn diese im Einzelfall nie benötgt werden. Auch dies bewirkt einen weiteren Gewichtsnachteil.

Es ist an sich bekannt, eine verschiebbare Entnahmestelle für ein Medium dadurch zu bilden, daß ein längs geschlitzter Kanal zwei Dichtlippen aufweist, die eine längs des Kanals verlaufende Dichtfuge bilden und ein die Dichtfuge durchdringender Entnahmestutzen in Längsrichtung des Kanals verfahrbar ist. Eine derartige Lösung, die beispielsweise die Belüftung einer Krankabine betrifft, ist der GB-A-1 412 470 zu entnehmen. Hierbei wird die Führerkabine eines längs einer Schienenanordnung verfahrbaren Kranes über einen Stutzen, der in einen in Fahrtrichtung des Kranes verlegten Kanal mit Dichtlippen hineinragt, an eine Frischluftversorgung bzw. an eine Absaugung angeschlossen. Eine weitere Lösung dieser Art, die jedoch hauptsächlich eine Bewässerungsanlage betrifft, ist durch die US-A-3 011 502 bekannt geworden.

Der Erfindung liegt die Aufgabe zugrunde, eine justierbare Anordnung der eingangs genannten Art für die Passagierkabine in einem Flugzeug so auszubilden, daß dabei die Verlagerung einer Versorgungseinheit an einen neuen Einbauort mit sehr geringem Aufwand durchführbar ist.

Diese Aufgabe wird bei einer gattungsgemäßen Anordnung dadurch gelöst, daß die Luftleitung aus einem geradlinigen formsteifen Hohlprofil mit einem Längsschlitz besteht, wobei der Längsschlitz durch mindestens eine in Ruhelage infolge einer Vorspannung geschlossene Dichtlippe abgedichtet ist und zur Entnahme der Luft aus dem Hohlprofil ein in Längsrichtung der Luftleitung mittels eines Schlittens geführter mit der Versorgungseinheit verbundener in den Innenraum des Hohlprofils hineinragender Entnahmestutzen vorgesehen ist, wobei der Schlitten eine von außen an der Dichtlippe anliegende Außenführung und eine vom Innenraum des Hohlprofils her an der Dichtlippe anliegende Innenführung aufweist, die mit dem Entnahmestutzen fest verbunden sind und so in einem gegenseitigen Abstand angeordnet sind, daß sie einen Zwischenraum bilden, der der Dichtlippe angepaßt ist.

Dabei ist insbesondere von Vorteil, daß material- und lohnintensive Lösungen vermieden werden.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: einen Luftanschluß mit zwei Dichtlippen für eine Versorgungseinheit,
- Fig. 2: den Schnitt II-II nach Fig. 1,
- Fig. 3: den Schnitt III-III nach Fig. 1,
- Fig. 4: den Schnitt IV-IV nach Fig. 1,
- Fig. 5: den Schnitt V-V nach Fig. 1,
- Fig. 6 bis 8: eine Weiterbildung mit Führungsleisten,
- Fig. 9: einen Luftanschluß mit einer Dichtlippe,
- Fig. 10: den Schnitt X-X nach Fig. 9,
- Fig. 11: den Schnitt XI-XI nach Fig. 9,
- Fig. 12: den Schnitt XII-XII nach Fig. 9,
- Fig. 13: eine Passagierkabine mit Versorgungseinheiten,
- Fig. 14: einen Schacht mit einer Versorgungseinheit,
- Fig. 15: eine Querbrücke mit Versorgungseinheiten und
- Fig. 16: die Querbrücke nach Fig. 15.

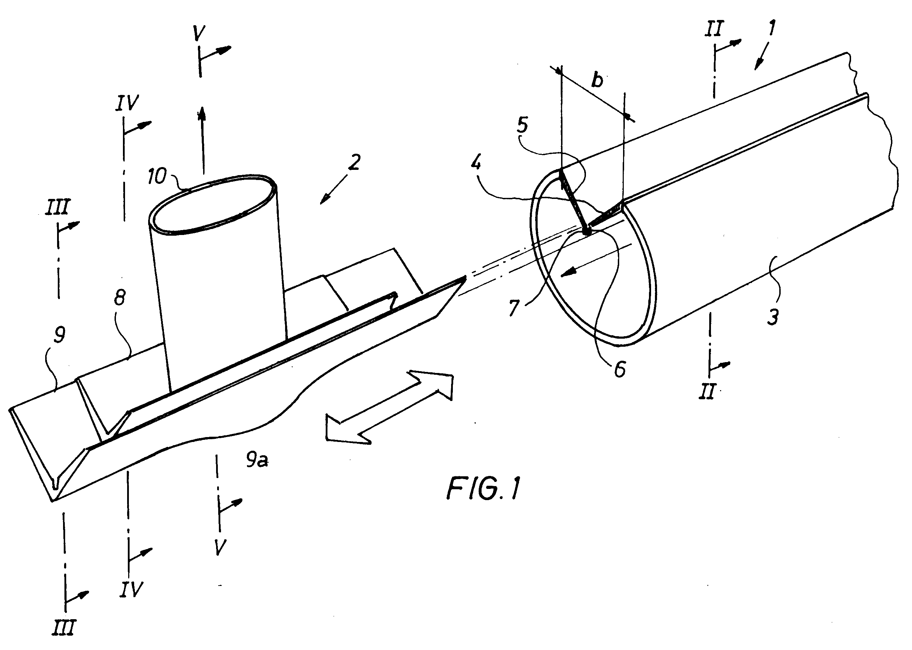

Fig. 1 zeigt in einer Explosionsdarstellung einen Luftanschluß zur Entnahme von Luft aus einer Luftleitung 1 für eine hier nicht gezeigte Versorgungseinheit, wobei der Luftanschluß durch einen Schlitten 2 gebildet wird. Die Luftleitung 1 besteht aus einem formsteifen Hohlprofil, das einen Längsschlitz von der Breite b aufweist. An den Kanten des Hohlprofils 3 ist jeweils eine Dichtlippe 4,5 befestigt, deren freie Kante als Schließkante 6 bzw. 7 ausgebildet ist. Infolge einer Vorspannung berühren sich die Schließkanten 6,7 gegenseitig, so daß die Dichtlippen 4,5 geschlossen sind. In geschlossener Position bilden die Dichtlippen 4,5 eine ins Innere der Luftleitung 1 hineinragende V-Form. Hierdurch wird erreicht, daß durch einen innerhalb der Luftleitung 1 wirkenden Überdruck eine zusätzliche Schließkraft auf die Dichtlippen wirkt. Der Schlitten 2 besteht im wesentlichen aus einer Außenführung 8 und einer Innenführung 9, die mit einem Entnahmestutzen 10 fest verbunden sind. In ihren vom Entnahmestutzen entfernten Bereichen weisen die Führungen 8 und 9 jeweils die Form eines Winkelprofils auf. Beide Führungen sind in einem gegenseitigen Abstand angeordnet, der einen an die Dichtlippen 4,5 angepaßten Zwischenraum bildet. Im Bereich des Entnahmestutzens 10 sind die Außenführung 8 und die Innenführung 9 geteilt und um den Entnahmestutzen 10 herumgeleitet. Hierdurch ergibt sich die im Bereich des Entnahmestutzens 10 sichtbare geschwungene Form 9a der Innenführung 9.

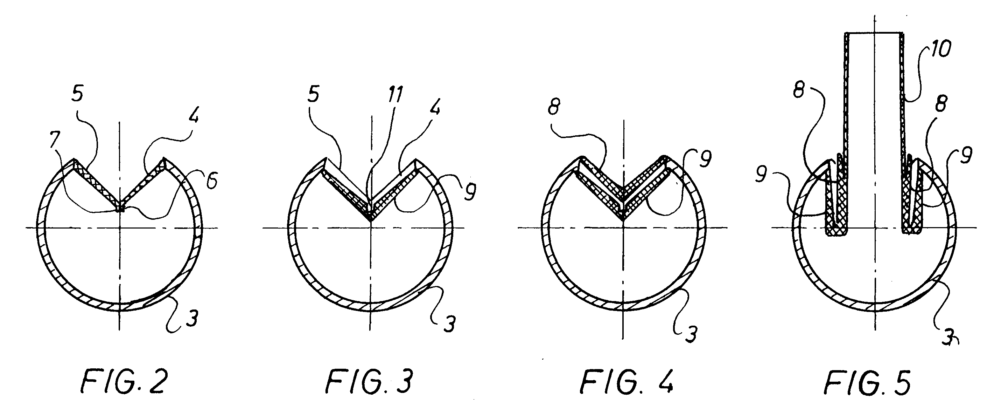

Fig. 2 zeigt den Schnitt II-II nach Fig. 1. Hierin erscheint das Hohlprofil 3 mit den Dichtlippen 4,5 im Querschnitt. Die Schließkanten 6 und 7 stellen dünnwandige Bereiche der Dichtlippen 4,5 dar, die gegenüber diesen so abgewinkelt sind, daß sich ihre Dichtflächen in der Symmetrieebene der Luftleitung 1 gegenseitig berühren. Das Hohlprofil 3 besteht aus einem biegesteifen Material und ist so dimensioniert, daß der auftretende Innendruck keine nennenswerte Formänderung des Hohlprofils 3 bewirkt.

Fig. 3 zeigt den Schnitt III-III nach Fig. 1 durch die Innenführung 9. Zusätzlich sind das Hohlprofil 3 und die Dichtlippen 4 und 5 in dünnen Linien dargestellt. Hierdurch wird deutlich, daß die Form der Innenführung 9 an die Dichtlippen 4,5 in geschlossenem Zustand angepaßt ist. Die Innenführung 9 bildet eine Art Winkelprofil, in dessen Hohlkehle sich eine Nut 11 befindet, welche die Schließkanten 6 und 7 aufnimmt.

Fig. 4 zeigt den Schnitt IV-IV nach Fig. 1. Dieser Schnitt ist durch die Innenführung 9 und die Außenführung 8 gelegt. Das Hohlprofil 3 und die Dichtlippen 4 und 5 sind wieder in dünnen Linien dargestellt. Hierdurch ist erkennbar, daß der zwischen beiden Führungen bestehende Zwischenraum gerade so ausgebildet ist, daß er die beiden Dichtlippen 4 und 5 aufnehmen kann.

Fig. 5 zeigt schließlich den Schnitt V-V nach Fig. 1. Dieser Schnitt ist axial durch den Entnahmestutzen 10 geführt, wobei wieder das Hohlprofil 3 und die Dichtlippen 4 und 5 in dünnen Linien dargestellt sind. In dieser Schnittebene sind die Außenführung 8 und die Innenführung 9 in der Mitte geteilt, wobei sich die jeweiligen Hälften seitlich des Entnahmestutzens 10 befinden. Auch hier ist der zwischen beiden Führungen 8,9 bestehende Zwischenraum so ausgebildet, daß er die beiden Dichtlippen 4 und 5 aufnehmen kann, wobei diese hier jedoch infolge der Form des Schlittens 2 geöffnet sind. Hierdurch steht der Entnahmestutzen 10 mit dem Innenraum des Hohlprofils 3 in Verbindung. Die übrigen Bereiche des Hohlprofils 3 bilden infolge der Dichtlippen 4,5 eine geschlossene Luftleitung.

Wirkt innerhalb der Luftleitung ein Druck, so kann eine Entnahme der Luft nur über den Entnahmestutzen 10 erfolgen, da die Dichtlippen 4,5 nur im Bereich des Entnahmestutzens 10 geöffnet sind. Ist es nun notwendig, eine über den Entnahmestutzen 10 an die Luftleitung angeschlossene Versorgungseinheit an einen anderen Ort im Zuge der Luftleitung zu verlegen, so kann der Entnahmestutzen 10 durch eine einfache Verschiebung längs der Luftleitung an den neuen Entnahmeort gebracht werden. Um das Verschieben des Schlittens 2 zu erleichtern, sind die Führungen 8,9 mit einem vorbestimmten Spiel an die Dichtlippen 4,5 angepaßt.

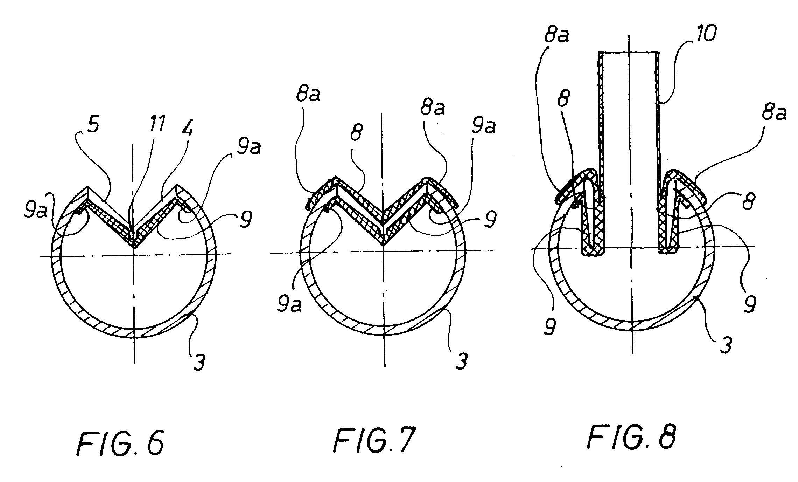

Die Figuren 6 bis 8 zeigen anhand entsprechender Schnitte eine Weiterbildung des Schlittens 2. Dabei sind die Außenführung 8 und die Innenführung 9 an ihren längs laufenden Rändern jeweils mit abgewinkelten Führungsleisten 8a bzw. 9a versehen. Hierdurch wird erreicht, daß die betreffenden Bereiche der Führungen 8,9 direkt auf dem Material des Hohlprofils 3 gleiten, wodurch der Verschleiß der betreffenden Teile wesentlich reduziert wird. Zugleich wird die mechanische Tragfähigkeit eines auf diese Weise ausgebildeten Schlittens erhöht.

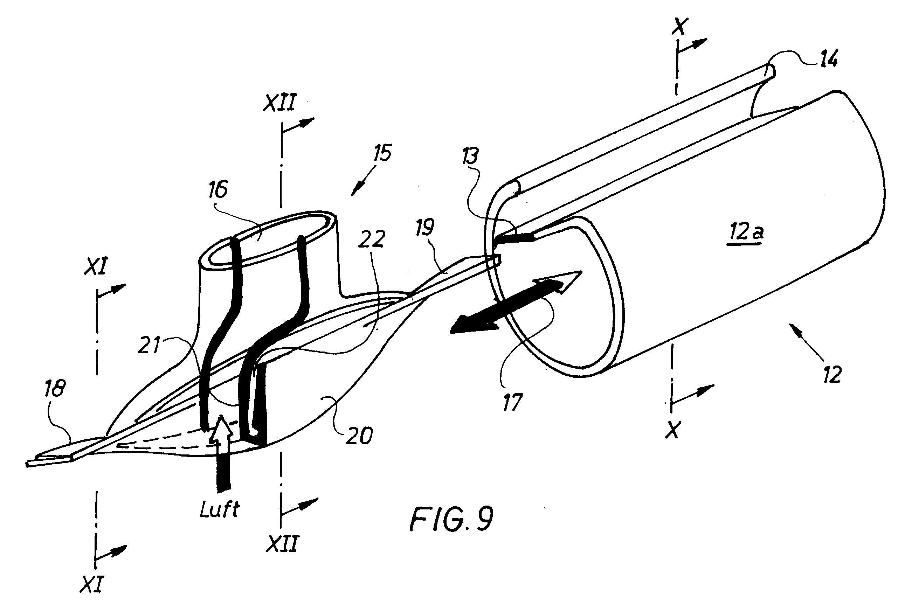

Fig. 9 zeigt eine Luftleitung 12, die wieder aus einem hier mit 12a bezeichneten formsteifen Hohlprofil gebildet ist. Das Hohlprofil 12a ist nur als kurzer Abschnitt dargestellt und weist eine längs laufende Dichtlippe 13 aus einem nachgiebigen Material und eine in gleicher Richtung verlaufende Führungskante 14 auf. Ein Schlitten 15 mit einem Entnahmestutzen 16 ist so in das Hohlprofil 12a einsetzbar, daß er bei einer Verschiebung in Pfeilrichtung 17 durch die Führungskante 14 einerseits und die Dichtlippe 13 andererseits geführt wird, wobei der Entnahmestutzen 16 mit dem Innenraum des Hohlprofils 12a in Verbindung steht. In Verschieberichtung am Anfang bzw. am Ende des Schlittens 15 ist jeweils eine Führungsfläche 18 bzw. 19 angeordnet, die durch eine Innenführung 20 miteinander verbunden sind. Im Bereich der Innenführung 20 bildet die Wandung des Entnahmestutzens 16 eine Außenführung 21, wobei zwischen dieser und der Innenführung 20 ein Schlitz 22 besteht, der dem Querschnitt der Dichtlippe 13 angepaßt ist.

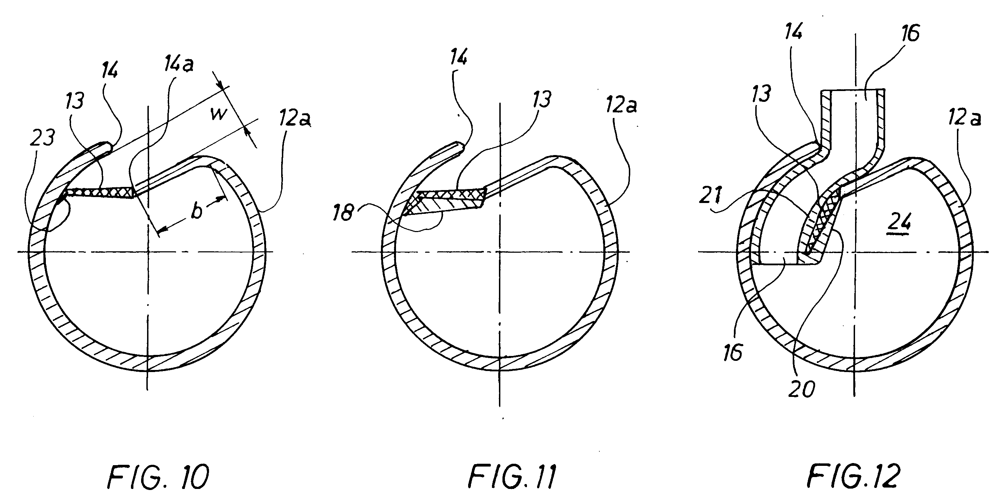

Fig. 10 zeigt das Hohlprofil 12a im Querschnitt mit der Führungskante 14, der Dichtlippe 13 und mit einer daran angeformten Schließkante 23. Die Dichtlippe 13 ist so angeordnet, daß die Schließkante 23 mit einer Vorspannung an der Innenfläche des Hohlprofils 12a anliegt. Wirkt nun innerhalb des Hohlprofils 12a ein Überdruck, so wird auf die Dichtlippe 13 eine zusätzliche Schließkraft ausgeübt.

Fig. 11 zeigt den Schnitt XI-XI nach Fig. 9. Dieser Schnitt ist durch die Führungsfläche 18 gelegt und zeigt diese im Querschnitt, wobei zugleich auch das Hohlprofil 12a so dargestellt ist, als sei der Schlitten 15 in das Hohlprofil 12a eingeschoben. Man erkennt, daß die Führungsfläche 18 von unten an der Dichtlippe 13 anliegt und an deren Unterseite angepaßt ist.

Fig. 12 zeigt schließlich den Schnitt XII-XII durch den Schlitten 15 nach Fig. 9, wobei der Schnitt auch hier zugleich mit dem Querschnitt des Hohlprofils 12a als Zusammenstellung dargestellt ist. Der Schnitt ist mitten durch den Schlitten 15 geführt und zeigt, daß der Entnahmestutzen 16 mit dem Innenraum 24 des Hohlprofils 12a in Verbindung steht. Die Außenführung 21 und die Innenführung 20 umgreifen die Dichtlippe 13 vom Entnahmestutzen 16 her. Die an dem Hohlprofil 12a und an der Dichtlippe 13 anliegenden Flächen des Schlittens 15 sind glatt, so daß sich dieser innerhalb des Hohlprofils 12a in Längsrichtung leicht verschieben läßt.

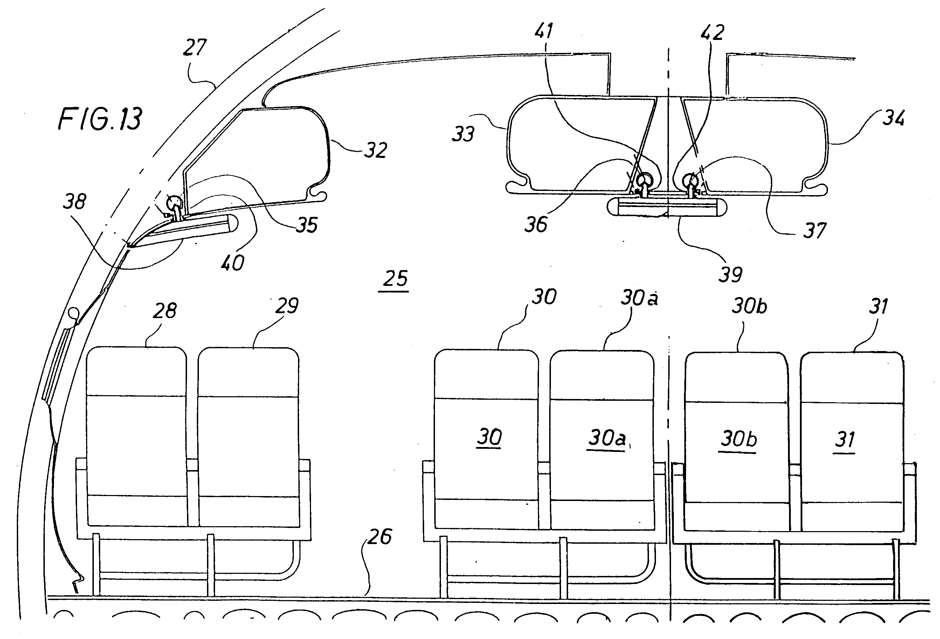

Fig. 13 zeigt nun in einem Teilquerschnitt durch einen Flugzeugrumpf, eine Passagierkabine 25 mit einem Fußboden 26, einer Rumpfstruktur 27 und Passagiersitzen 28 bis 31, wobei im oberen Kabinenbereich Gepäckablagen 32 bis 34 angeordnet sind. Dabei bilden die Gepäckablagen 33 und 34 baulich eine Mittelgepäckablage. Jeweils im Bereich der Gepäckablagen 32 bis 34 sind in Längsrichtung des Rumpfes Luftleitungen 35 bis 37 verlegt. Diese Luftleitungen sind als formsteife Hohlprofile mit einem Längsschlitz ausgebildet, woran Versorgungseinheiten 38 und 39 angeschlossen sind. Die im Bild linke Versorgungseinheit 38 ist den Passagiersitzen 28 und 29 zugeordnet. Die in der Rumpfmitte befindliche Versorgungseinheit 39 ist den Passagiersitzen 30 bis 31 zugeordnet. Jede der Versorgungseinheiten 38,39 ist unterhalb der betreffenden Kabinenwandung hängend angeordnet und weist für jeden zugeordneten Sitz eine hier nicht sichtbare Luftdusche auf und ist in Kabinenlängsrichtung verschiebbar. Außer der Luftdusche weist jede Versorgungseinheit weitere Funktionsorgane auf wie Leselampen, Stewardruftasten, optische Anzeigefelder, Lautsprecher, Sauerstoffmasken u.s.w. Die Übertragung entsprechender elektrischer Energie bzw. elektrischer Signale erfolgt über Schleifkontaktschieber bekannter Art. Um nun die Versorgung der Luftduschen mit frischer Luft sicherzustellen, sind seitens der Luftleitungen 35 bis 37 längs verschiebbare Entnahmestutzen 40 bis 42 angeordnet, die mit den Versorgungseinheiten 38,39 fest verbunden sind. Damit können die Versorgungseinheiten 38,39 im Zuge einer Umrüstung der Kabine auf andere Sitzabstände durch einfaches Verschieben in ihre neuen Positionen gebracht werden.

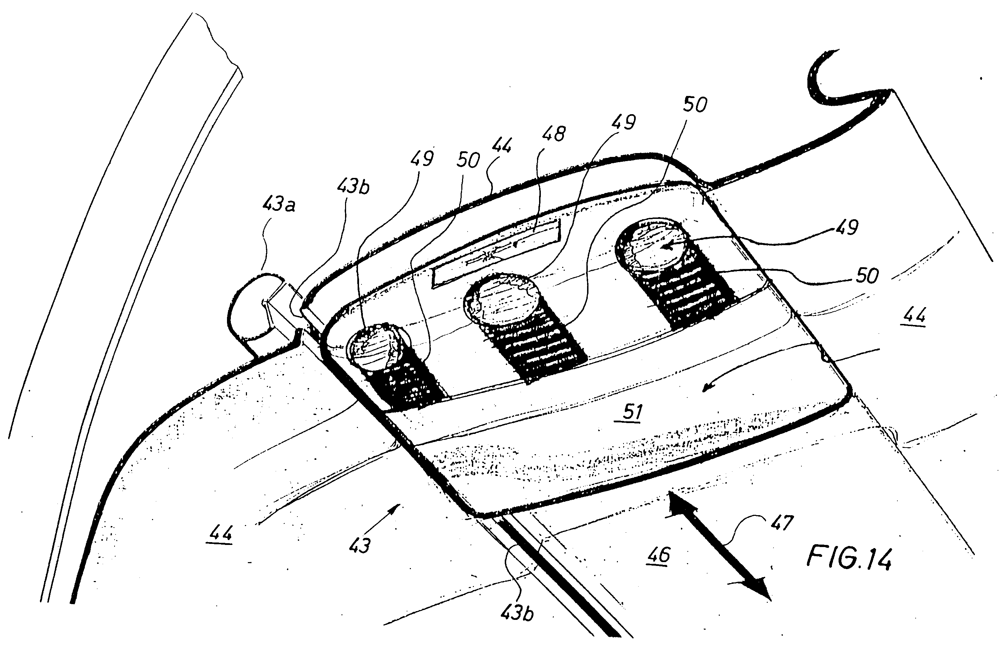

Figur 14 zeigt eine Versorgungseinheit 43, die innerhalb eines in eine Kabinenverkleidung 44 flächenbündig versenkten Schachtes 46 in Kabinenlängsrichtung gemäß dem Pfeil 47 verschiebbar ist. Die Versorgungseinheit 43 weist ein Anzeigefeld 48, drei Lampen 49 und drei Luftduschen 50 auf. Hinter einer Klappe 51 sind Sauerstoffmasken auf übliche Weise angeordnet. Die Verschiebbarkeit ergibt sich durch hier nicht sichtbare, in Richtung des Schachtes 46 verlaufende Führungsschienen, in die entsprechende Elemente der Versorgungseinheit 43 eingreifen. Zur Versorgung der Luftduschen 50 mit Frischluft dient die Luftleitung 43a, die im Prinzip gemäß den Figuren 1 bis 8 ausgebildet ist. Seitens der Versorgungseinheit 43 ist ein Entnahmestutzen vorgesehen, der zur Entnahme der Luft durch die entsprechenden Dichtlippen in den Innenraum der Luftleitung 43a hineinragt. Entsprechend weist die Innenverkleidung 44 einen Schlitz 43b auf. Für die elektrische Energie- bzw. Signalübertragung sind entsprechende Schleifkontaktschienen vorgesehen.

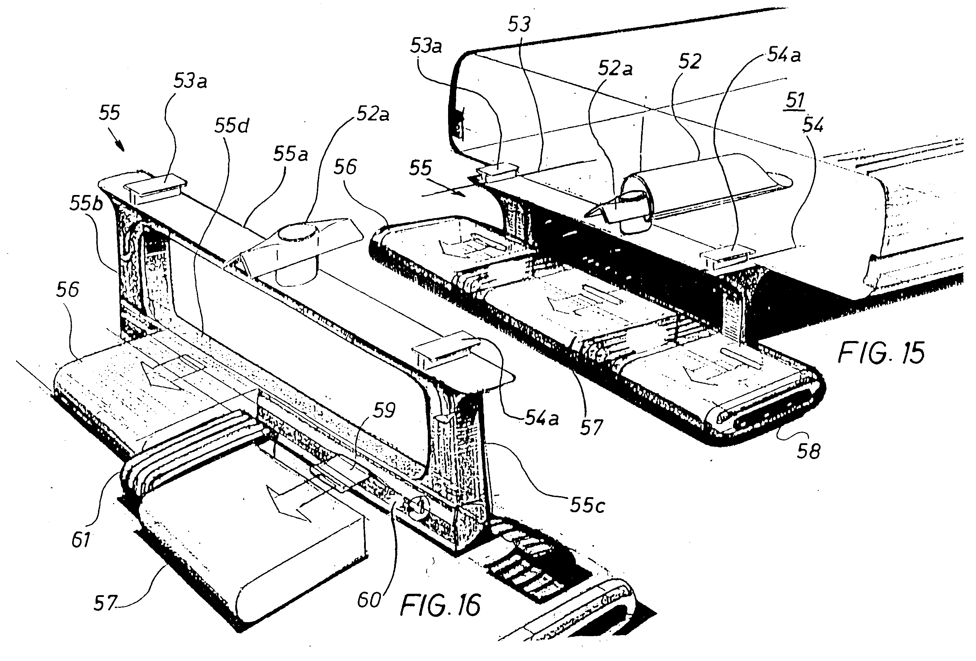

Die Figuren 15 und 16 zeigen eine Mittelgepäckablage 51 mit einer Luftleitung 52 und Führungsschienen 53 und 54. Unterhalb der Mittelgepäckablage 51 ist eine Querbrücke 55 mit Versorgungseinheiten 56 bis 58 hängend angeordnet. Die Querbrücke 55 bildet einen Rahmen, bestehend aus einem oberen Querträger 55a, zwei seitlichen Stegen 55b, 55c und einem unteren Querträger 55d. Der obere Querträger 55a weist Führungselemente 53a und 54a auf, die in die Führungsschienen 53 und 54 eingreifen, so daß die Querbrücke 55 in Kabinenlängsrichtung verschiebbar ist. Weiterhin weist der obere Querträger 55a einen Entnahmestutzen 52a auf, der in die Luftleitung 52 hineinragt. Die Luftleitung 52 ist erfindungsgemäß als geschlitzter formsteifer Hohlquerschnitt mit längslaufenden Dichtlippen ausgebildet und dient zur Speisung der Versorgungseinheiten 56 bis 58 mit Frischluft. Diese wird über entsprechende innerhalb der Stege 55b,55c angeordnete Kanäle in den unteren Querträger 55d geleitet, in dem sich eine hier nicht näher gezeigte geschlitzte Querleitung befindet, in die jeweils mit den einzelnen Versorgungseinheiten 56,57,58 fest verbundene Entnahmestutzen eingreifen. Hierdurch sind die Entnahmestutzen in der geschlitzten Querleitung verschiebbar, wodurch auch die Versorgungseinheiten 56 bis 58 verschiebbar sind, jetzt jedoch in Kabinenquerrichtung. Durch Anordnung der Querbrücke 55 wird erreicht, daß die damit verbundenen Versorgungseinheiten 56,57,58 gruppenweise in Kabinenlängsrichtung verschiebbar sind. Die Versorgungseinheit 57 ist in einem Abstand zum unteren Teil der Querbrücke 55 dargestellt. Hierdurch wird der Entnahmestutzen 59 sichtbar, der durch eine Lippendichtung 60 in die besagte Querleitung hineinragt. Zwischen den Versorgungseinheiten 56 und 57 bzw. 57 und 58 sind Füllelemente 61 und 62 angeordnet. Diese sind als Faltenbälge ausgebildet, so daß sie sich in Querrichtung in weiten Grenzen auseinanderziehen oder zusammenschieben lassen. Hierdurch wird erreicht, daß die drei Versorgungseinheiten 56,57,58 auch bei unterschiedlichen gegenseitigen Abständen optisch immer eine Einheit bilden.

Eine Ausgestaltung der Erfindung mit einer Querbrücke besteht darin, daß die betreffenden Versorgungseinheiten starr an der Querbrücke befestigt sind.

## Patentansprüche

1. Anordnung, bestehend aus einer Luftleitung (1) und einer Versorgungseinheit im oberen Bereich einer Passagierkabine, in einem Flugzeug, wobei die Versorgungseinheit (38,39,43) Komfort- und Bedienelemente wie eine schaltbare Leseleuchte, eine Stewardruftaste, einen Lautsprecher, Sauerstoffmasken, und eine optische Anzeigeeinheit aufweist,
dadurch **gekennzeichnet,** daß die Luftleitung (1) aus einem geradlinigen formsteifen Hohlprofil (3,12a) mit einem Längsschlitz besteht, wobei der Längsschlitz durch mindestens eine in Ruhelage infolge einer Vorspannung geschlossene Dichtlippe (4,5,13) abgedichtet ist und zur Entnahme der Luft aus dem Hohlprofil ein in Längsrichtung der Luftleitung (1) mittels eines Schlittens (2) geführter mit der Versorgungseinheit (38,39,43) verbundener in den Innenraum des Hohlprofils (3) hineinragender Entnahmestutzen (10,16) vorgesehen ist, wobei der Schlitten (2,15) eine von außen an der Dichtlippe (4, 5,13) anliegende Außenführung (8,21) und eine vom Innenraum des Hohlprofils her an der Dichtlippe (4,5,13) anliegende Innenführung (9,20) aufweist, die mit dem Entnahmestutzen (10,16) fest verbunden sind und so in einem gegenseitigen Abstand angeordnet sind, daß sie einen Zwischenraum bilden, der der Dichtlippe (4,5,13) angepaßt ist.

2. Anordnung nach Anspruch 1,
dadurch **gekennzeichnet**, daß die Außenführung (8) und die Innenführung (9) im Bereich des Entnahmestutzens (10) in der Mitte geteilt sind und sich die jeweiligen Hälften seitlich des Entnahmestutzens (10) befinden und die Außenführung (8) und die Innenführung (9) in ihren vom Entnahmestutzen entfernten Bereichen jeweils die Form eines Winkelprofils aufweisen.

3. Anordnung nach Anspruch 1 oder 2,
dadurch **gekennzeichnet**, daß die Außenführung (8) und die Innenführung (9) an ihren in Längsrichtung verlaufenden Rändern mit abgewinkelten Führungsleisten (8a) bzw. (9a) versehen sind.

4. Anordnung nach einem der Ansprüche 1 bis 3,
dadurch **gekennzeichnet**, daß der Schlitten für jede Dichtlippe einen Führungsschlitz aufweist.

5. Anordnung nach einem der Ansprüche 1 bis 4,
dadurch **gekennzeichnet**, daß die Dichtlippen (4,5) in geschlossener Position eine ins Innere der Luftleitung hineinragende V-Form bilden.

6. Anordnung nach einem der Ansprüche 1 bis 5,
dadurch **gekennzeichnet**, daß der Entnahmestutzen (16) so in das Hohlprofil (12a) einsetzbar ist, daß er bei einer Verschiebung in Richtung des Hohlprofils (12a) durch die Führungskante (14) einerseits und die Dichtlippe (13) andererseits geführt wird.

7. Anordnung nach Anspruch 6,
dadurch **gekennzeichnet**, daß am Anfang bzw. am Ende des Schlittens (15) jeweils eine Führungsfläche (18) bzw. (19) angeordnet ist, die durch eine Innenführung (20) miteinander verbunden sind und die Wandung des Entnahmestutzens eine Außenführung (21) bildet, wobei zwischen dieser und der Innenführung (20) ein Schlitz (22) besteht, der dem Querschnitt der Dichtlippe (13) angepaßt ist.

8. Anordnung nach einem der Ansprüche 1 bis 7,
dadurch **gekennzeichnet**, daß die an dem Hohlprofil (12a) und an den Dichtlippen (4,5,13) anliegenden Flächen des Schlittens (2,15) glatt ausgebildet sind.

9. Anordnung nach einem der Ansprüche 1 bis 9,
dadurch **gekennzeichnet**, daß die Versorgungseinheit (38,39,43) mit einem Entnahmestutzen (10,16) fest verbunden ist, der innerhalb der kabinenseitigen Luftleitung (35,36,37) mit einem Längsschlitz geradlinig geführt ist, so daß die Versorgungseinheit (38,39,43) gegenüber der Kabinenverkleidung geradlinig verschiebbar ist, wobei der Kontakt mit den kabinenseitigen elektrischen Leitungen durch an sich bekannte Schleifkontaktschieber verwirklicht ist.

10. Anordnung nach einem der Ansprüche 1 bis 9,
dadurch **gekennzeichnet**, daß die Versorgungseinheit (38,39,43) als in Kabinenlängsrichtung verschiebbare Einheit ausgebildet ist.

11. Anordnung nach Anspruch 10,
dadurch **gekennzeichnet**, daß die Versorgungseinheit (38,39,43) als in Kabinenquerrichtung verschiebbare Einheit ausgebildet ist.

12. Anordnung nach einem der Ansprüche 1 bis 11,
dadurch **gekennzeichnet**, daß die Versorgungseinheit (56,57,58) innerhalb eines in die Kabinenverkleidung (44) versenkten Kanals (46) verschiebbar geführt ist.

13. Anordnung nach einem der Ansprüche 1 bis 12,
dadurch **gekennzeichnet**, daß zwischen den Versorgungseinheiten (56,57,58) als Faltenbälge ausgebildete Füllelemente (61,62) angeordnet sind.

14. Anordnung nach einem der Ansprüche 1 bis 13,
dadurch **gekennzeichnet**, daß die Versorgungseinheit (38,39,43) starr an einer Querbrücke (55) befestigt ist.

15. Anordnung nach einem der Ansprüche 1 bis 14,
dadurch **gekennzeichnet**, daß die Versorgungseinheit (38,39,43) als unterhalb der betreffenden Kabinenwandung hängende Einheit ausgebildet ist.

16. Anordnung nach einem der Ansprüche 1 bis 15,
dadurch **gekennzeichnet**, daß die Versorgungseinheit (38,39,43) als innerhalb eines in die Kabinenwandung (44) versenkten Schachtes (46) in Kabinenlängsrichtung verschiebbare Einheit ausgebildet ist.

## Claims

1. An arrangement, comprising an air line (1) and a supply unit in the upper region of a passenger cabin, in an aeroplane, the supply unit (38, 39, 43) comprising comfort- and operating elements as well as a switchable reading light, a steward call button, a loudspeaker, oxygen masks and a visual display unit, characterised in that the air line (1) is formed by a linear, inherently stable hollow profile (3, 12a) with a longitudinal slot, the longitudinal slot being sealed by at least one sealing lip (4, 5, 13), which is closed in the inoperative position as a result of prestressing, and for extracting the air from the hollow profile an extraction socket (10, 16) is provided, which is guided in the longitudinal direction of the air line (1) by means of a carriage (2), is connected to the supply unit (38, 39, 43) and projects into the interior of the hollow profile (3), the carriage (2, 15) comprising an outer guide (8, 21) resting against the outside of the sealing lip (4, 5, 13) and an inner guide (9, 20) resting against the sealing lip (4, 5, 13) from the interior chamber of the hollow profile, which guides are fixedly connected to the extraction socket (10, 16) and are arranged at a distance apart which forms an intermediate space matching the sealing lip (4, 5, 13).

2. An arrangement according to claim 1, characterised in that the outer guide (8) and the inner guide (9) are divided in the centre in the region of the extraction socket (10) and the respective halves are arranged either side of the extraction socket (10), and the outer guide (8) and the inner guide (9) each have the form of an angular profile in their regions remote from the extraction socket.

3. An arrangement according to claim 1 or 2, characterised in that the outer guide (8) and the inner guide (9) are provided with angled guide strips (8a) and (9a) at their edges extending in the longitudinal direction.

4. An arrangement according to one of claims 1 to 3, characterised in that the carriage comprises a guide slot for each sealing lip.

5. An arrangement according to one of claims 1 to 4, characterised in that, in the closed position, the sealing lips (4, 5) form a V-shape projecting into the interior of the air line.

6. An arrangement according to one of claims 1 to 5, characterised in that the extraction socket (16) is insertable in the hollow profile (12a) in such a manner that it is guided by the guide edge (14) on one side and the sealing lip (13) on the other when it is displaced in the direction of the hollow profile (12a).

7. An arrangement according to claim 6, characterised in that a guide surface (18) and (19) is arranged in each case at the start and end respectively of the carriage (15), which surfaces are connected to one another by an inner guide (20), and the wall of the extraction socket forms an outer guide (21), a slot (22) which matches the cross section of the sealing lip (13) being formed between the outer guide (21) and the inner guide (20).

8. An arrangement according to one of claims 1 to 7, characterised in that the surfaces of the carriage (2, 15) resting against the hollow profile (12a) and against the sealing lips (4, 5, 13) are smooth.

9. An arrangement according to one of claims 1 to 8, characterised in that the supply unit (38, 39, 43) is fixedly connected to an extraction socket (10, 16), which is linearly guided within the air line (35, 36, 37) on the side facing the cabin by means of a longitudinal slot, so that the supply unit (38, 39, 43) is linearly displaceable relative to the cabin paneling, the contact with the electrical lines on the side facing the cabin being realised by a sliding contact element known per se.

10. An arrangement according to one of claims 1 to 9, characterised in that the supply unit (38, 39, 43) is constructed as a unit which is displaceable in the longitudinal direction of the cabin.

11. An arrangement according to claim 10, characterised in that the supply unit (38, 39, 43) is constructed as a unit which is displaceable in the transverse direction of the cabin.

12. An arrangement according to one of claims 1 to 11, characterised in that the supply unit (56, 57, 58) is displaceably guided within a recessed duct (46) in the cabin paneling (44).

13. An arrangement according to one of claims 1 to 12, characterised in that filler elements (61, 62) constructed as bellows are arranged between the supply units (56, 57, 58).

14. An arrangement according to one of claims 1 to 13, characterised in that the supply unit (38, 39, 43) is rigidly secured to a cross bridge (55).

15. An arrangement according to one of claims 1 to 14, characterised in that the supply unit (38, 39, 43) is constructed as a unit suspended beneath the relevant cabin wall.

16. An arrangement according to one of claims 1 to 15, characterised in that the supply unit (38, 39, 43) is constructed as a unit which is displaceable in the longitudinal direction of the cabin within a recessed shaft (46) in the cabin wall (44).

## Revendications

1. Dispositif se composant d'une conduite d'aération (1) et d'une unité de distribution dans la zone supérieure d'une cabine de passagers, dans un avion, l'unité de distribution (38, 39, 43) présentant des éléments de confort et de commande tels qu'une liseuse commutable, une touche d'appel du steward, un haut-parleur, des masques à oxygène et une unité d'affichage optique, **caractérisé en ce que** la conduite d'aération (1) se compose d'un profilé creux (3, 12a) indéformable et rectiligne pourvu d'une fente longitudinale rendue étanche par au moins une lèvre d'étanchéité (4, 5, 13) fermée à l'état de repos suite à une prétension et qui, dans le but de soutirer l'air en dehors du profilé creux, présente un raccord de prise (10, 16) s'engrènant dans l'espace interne du profilé creux (3), relié à l'unité de distribution (38, 39, 43) et guidé dans la direction longitudinale de la conduite d'aération (1) au moyen d'un coulisseau (2), ledit coulisseau (2, 15) présentant un guide externe (8, 21) reposant depuis l'extérieur sur la lèvre d'étanchéité (4, 5, 13) et un guide interne (9, 20) reposant, en partant de l'espace interne du profilé creux, sur la lèvre d'étanchéité (4, 5, 13), lesquels guides sont fixés au raccord de prise (10, 16) et disposés à une distance opposée de telle manière qu'ils forment un espace intermédiaire adapté à la lèvre d'étanchéité (4, 5, 13).

2. Dispositif selon la revendication 1, caractérisé en ce que le guide externe (8) et le guide interne (9) dans la zone du raccord de prise (10) sont divisés en leur milieu, en ce que les moitiés respectives se situent sur les côtés du raccord de prise (10) et en ce que le guide externe (8) et le guide interne (9) présentent, dans leurs zones éloignées du raccord de prise, la forme d'un profilé angulaire.

3. Dispositif selon l'une ou l'autre des revendications 1 à 2, caractérisé en ce que le guide externe (8) et le guide interne (9) sont pourvus sur leurs bords s'étendant dans la direction longitudinale de barres conductrices (8a) ou (9a) formant un angle.

4. Dispositif selon l'une ou l'autre des revendications 1 à 3, caractérisé en ce que le coulisseau présente une fente de guidage pour chaque lèvre d'étanchéité.

5. Dispositif selon l'une ou l'autre des revendications 1 à 4, caractérisé en ce que les lèvres d'étanchéité (4, 5), en position fermée, constituent une forme en V se trouvant à l'intérieur de la conduite d'aération.

6. Dispositif selon l'une ou l'autre des revendications 1 à 5, caractérisé en ce que le raccord de prise (16) peut être inséré de telle manière dans le profilé creux (12a) que, en cas de décalage dans la direction du profilé creux (12a), ledit raccord est guidé, d'une part, par le flanc d'appui (14) et, d'autre part, par la lèvre d'étanchéité (13).

7. Dispositif selon la revendication 6, caractérisé en ce que au début ou à l'extrémité du coulisseau (15) est respectivement disposée une surface de guidage (18) ou (19), qui sont reliées l'une à l'autre par un guide interne (20) et en ce que la paroi du raccord de prise forme un guide externe (21), une fente (22) existant entre ledit guide externe et le guide interne (20) et étant adaptée à la section transversale de la lèvre d'étanchéité (13).

8. Dispositif selon l'une ou l'autre des revendications 1 à 7, caractérisé en ce que les surfaces du coulisseau (2, 15) reposant sur le profilé creux (12a) et les lèvres d'étanchéité (4, 5, 13) sont lisses.

9. Dispositif selon l'une ou l'autre des revendications 1 à 9, caractérisé en ce que l'unité de distribution (38, 39, 43) est fixée à un raccord de prise (10, 16) qui est guidé de façon rectiligne à l'intérieur de la conduite d'aération (35, 36, 37) côté cabine au moyen d'une fente longitudinale, si bien que l'unité de distribution (38, 39, 43) peut être coulissée de façon rectiligne par rapport au revêtement de la cabine, le contact avec les conduites électriques côté cabine s'effectuant par l'intermédiaire d'un curseur de contact à frottement.

10. Dispositif selon l'une ou l'autre des revendications 1 à 9, caractérisé en ce que l'unité de distribution (38, 39, 43) est conçue comme une unité pouvant être coulissée dans la direction longitudinale de la cabine.

11. Dispositif selon la revendication 10, caractérisé en ce que l'unité de distribution (38, 39, 43) est conçue comme une unité pouvant être coulissée dans la direction transversale à la cabine.

12. Dispositif selon l'une ou l'autre des revendications 1 à 11, caractérisé en ce que l'unité de distribution (56, 57, 58) est guidée de manière à pouvoir être coulissée à l'intérieur d'un canal (46) encastré dans le revêtement de la cabine (44).

13. Dispositif selon l'une ou l'autre des revendications 1 à 12, caractérisé en ce que, entre les unités de distribution (56, 57, 58), sont disposés des éléments de remplissage (61, 62) conçus comme des soufflets d'intercirculation.

14. Dispositif selon l'une ou l'autre des revendications 1 à 13, caractérisé en ce que l'unité de distribution (38, 39, 43) est fixée à un pont transversal (55).

15. Dispositif selon l'une ou l'autre des revendications 1 à 14, caractérisé en ce que l'unité de distribution (38, 39, 43) est conçue comme une unité suspendue en-dessous de la paroi de la cabine concernée.

16. Dispositif selon l'une ou l'autre des revendications 1 à 15, caractérisé en ce que l'unité de distribution (38, 39, 43) est conçue comme une unité pouvant être coulissée dans la direction longitudinale de la cabine à l'intérieur d'une gaine (46) insérée dans la paroi de la cabine (44).
